# EUROPEAN PATENT APPLICATION

(11) **EP 2 424 191 A1**
(43) Date of publication of application: **29.02.2012**
(21) Application number: 11150221.7
(22) Date of filing: 05.01.2011
(51) Int. Cl.: H04L 29/08

(54) **Network service providing system with high reliability**

(30) Priority: 27.08.2010 TW 099128764
(71) Applicant: Atop Technologies, Inc., Hsinchu 30076 (CN)
(72) Inventor: Peng, Tsu-Yi, 30076, Hsinchu (TW)
(74) Representative: Reichert, Sabine

(57) **Abstract**

A network service providing system with high reliability includes a cloud service platform (11) and an agent system (12). The cloud service platform is connected to the Internet (60) and is for providing a network service. The agent system is connected to a network (70) linked with the Internet. The agent system includes a network service server (122), a login module (121) and a data synchronization module (123). The network service server is for providing the network service. The login module receives the inputted identification information from a user device (80a, 80b) and directs the user device to establish a connection with the cloud service platform or the network service server. The data synchronization module is for synchronizing between a service data stored in the cloud service platform and the network service server. The aforementioned network providing system may avoid the single failure of point problem thereby enhancing the availability and usability of the network service.

## Description

The present invention relates to a network service providing system, and more particularly to a network service providing system with high reliability.

Nowadays cloud service providers provide high speed computing platforms and high speed network bandwidth for enterprises to establish services on these high speed computing platforms. However, when an enterprise establishes all of its services on a cloud platform, in case the cloud platform is not stable, the enterprise would not be able to afford the corresponding service.

A prior art technology known for its high availability sets an additional backup equipment which, through network or connected cable, constantly monitors whether the original service providing equipment operates normally. When the original service providing equipment is not able to provide service, the backup equipment replaces the address of the original service providing equipment to supply the corresponding service. However, the aforementioned technology is more suitable for providing backup for the service of a local server. Besides, when the external accessing gateway of the service provider is abnormal, the backup equipment still cannot provide the corresponding service.

Another transparent proxy technology sets a proxy equipment on the route of the network service requested by a user. The proxy equipment directs the intercepted network traffic to the service providing equipment, and acts as a liaison to the outside. The aforementioned proxy technology may also be employed to realize a highly reliable network service. For example, when a user tries to link to an external web service, the aforementioned proxy technology enables the user to access the cached service provided by the proxy equipment. However, the proxy equipment is disposed on the route to the requested network service; therefore, when the proxy equipment is abnormal, such as in the situation when the proxy equipment becomes a node for an attack of distributed denial of service (DoS), the user would not be able to access the network service, resulting in the so called single failure of point problem. In addition, when introducing the proxy equipment to a user network, the network has to be interrupted, causing a bothersome issue to the user.

In summary, it is highly desirable to raise the availability and usability of the network service providing system.

The present invention is directed to a network service providing system with high reliability which sets an agent system, wherein a login module directs the user to establish a connection with a cloud service platform or a network service server in the agent system based on the network connection quality, and the user may also directly log in to the cloud service platform or the network service server in the agent system to access the corresponding network service. Therefore, the network service providing system of the present invention has a better reliability.

According to an embodiment, the network service providing system with high reliability includes a cloud service platform and a first agent system. The cloud service platform is connected with an Internet and is for providing a network service to be accessed by a user device. The first agent system is connected to a first network linked with the Internet. The first agent system includes a first network service server, a first login module and a first data synchronization module. The first network service server is for providing the network service to be accessed by the user device. The first login module receives the inputted identification information from the user device and directs the user device to establish a connection with the cloud service platform or the first network service server. The first data synchronization module is for synchronizing between the service data stored in the cloud service platform and the first network service server.

The objective, technologies, features and advantages of the present invention will become more apparent from the following description in conjunction with the accompanying drawings, wherein certain embodiments of the present invention are set forth by way of illustration and examples.

Fig. 1 is a schematic diagram illustrating the network service providing system with high reliability according to an embodiment of the present invention;

Fig. 2 is a schematic diagram illustrating the network service providing system with high reliability according to another embodiment of the present invention;

Fig. 3 is a flow chart illustrating the operation flow of the network service providing system with high reliability according to an embodiment of the present invention; and

Fig. 4 is a flow chart illustrating the flow of synchronizing or migrating network service of the network service providing system with high reliability according to an embodiment of the present invention.

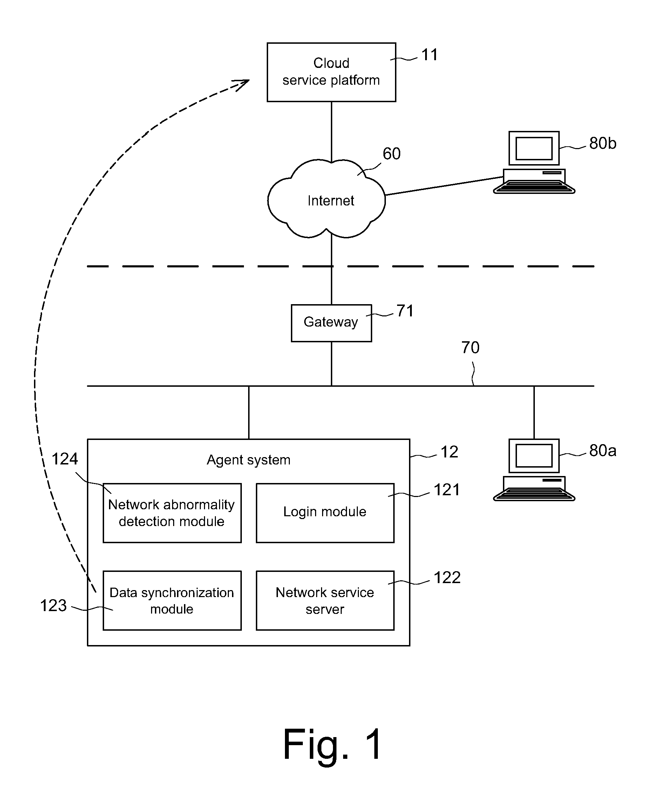

Referring to Fig. 1, the network service providing system with high reliability according to an embodiment includes a cloud service platform 11 and a agent system 12. The cloud service platform 11 is a node in an Internet 60 and is for providing a network service to be accessed by a user device 80a, 80b. For example, the network service may be an email service, web service, file management service, calendar, address book, user authentication or the combination thereof.

The agent system 12 is a node in a network 70, wherein the network 70 is linked with the Internet 60. According to an embodiment, the network 70 may be an intranet, for example, composed of its local area networks. The network 70 may connect to the Internet 60 through a gateway 71 to allow the network devices within the internal network to establish connections with the cloud service platform 11. The agent system 12 includes a network service server 122, a login module 121 and a data synchronization module 123. The network service server 122 is also for supplying a network service to be accessed by the user devices 80a, 80b. The network services provided by the network service server 122 and the cloud service platform 11 are the same.

Continuing the above description, the login module 121 may receive an identification information inputted by a user through the user device 80a, 80b, information such as an account and a password. When the identification information is correct, the login module 121 would direct the user device 80a, 80b to establish a connection with the cloud service platform 11 or the network service server 122. After the user device 80a, 80b has established a connection with the cloud service platform 11 or the network service server 122, it may access the network service provided by the cloud service platform 11 or the network service server 122. The data synchronization module 123 is for synchronizing the service data stored by the network service server 123 with the cloud service platform 123, and maintains the service data of the two to be consistent. Note that the agent system 12 may be composed of a plurality of physical servers. Moreover, the agent system 12 may also be provided by an Internet service provider (ISP). As such, the hardware equipments and the network bandwidth required by the agent system 12 would not have to be managed by oneself.

According to an embodiment, based on the network segment where the user devices 80a, 80b are located, the login module 121 may direct the user devices 80a, 80b to establish connections with the cloud service platform 11 or the network service server 122. For example, the user device 80a and the network service server 123 are both in the network 70; thus, it is more efficient for the user device 80a to access the network service provided by the network service server 123. In this case, the login module 121 directs the user device 80a to establish a connection with the network service server 123. On the contrary, the user device 80b is located in the Internet 60, and the hardware and bandwidth limitations of the network service server 123 would cause it more efficient for the user device 80b to access the network service supplied by the cloud service platform 11. In this case, the login module 121 directs the user device 80b to establish a connection with the cloud service platform 11.

Referring still to Fig. 1, the agent system 12 according to an embodiment includes a network abnormality detection module 124. The network abnormality detection module 124 is for detecting the connection qualities of the network service platform 11 and the network service server 122 of the agent system 12. The login module 121 can therefore rely on the connection qualities detected by the network abnormality detection module 124 to direct the user device 80a, 80b to establish a connection with the cloud service platform 11 or network service server 122 that has the better connection quality. For instance, the network abnormality detection module 124 sends network packets to test if the cloud service platform 11 responds in time. If time-out for response is reached, the login module 121 directs the user device 80a, 80b to establish a connection with the network service server 122.

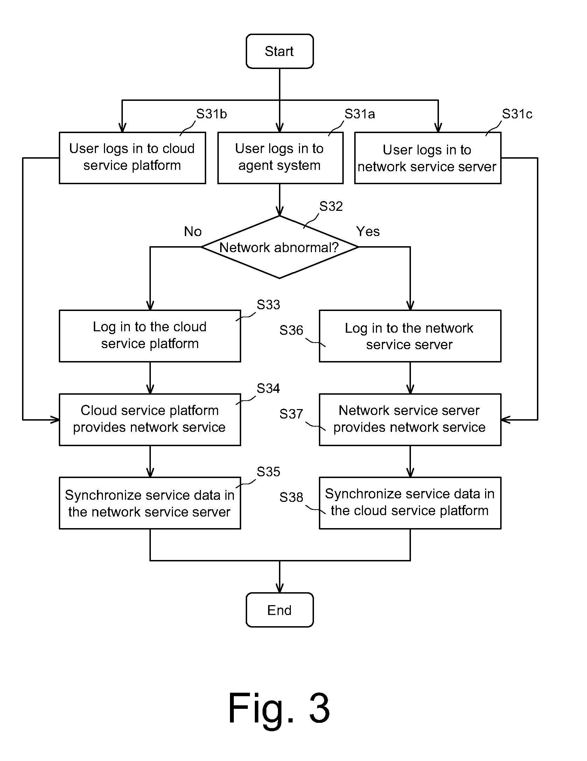

Referring to Fig. 3, there is illustrated an operation flow of the network service providing system with high reliability according to an embodiment. First, the user logs in to the login module 121 of the agent system 12 (S31 a). Next, the agent system 12 determines if the network is abnormal (S32). Abnormal situations of a network includes, but not limited to, the following: abnormal external accessing network (e.g. malfunctions of the gateway), failure accessing the network service of the cloud service platform 11, congested network and so on. If the network is not abnormal, the login module 121 would log in to the cloud service platform 11 with the received identification information for the user (S33). Then the user can access the network service provided by the cloud service platform 11 normally (S34). If the user updates any service data, the data synchronization module 123 of the agent system 12 would synchronize service data of the network service server 122 to the updated service data of the cloud service platform 11 (S35). In case the network is abnormal, the login module 121 would log in to the network service server 122 for the user (S36), and the user would be able to access the network service supplied by the network service server 122 (S37). When the user updates any service data, the data synchronization module 123 synchronizes service data of the cloud service platform 11 to the updated service data of the network service server 122 (S38).

Note that the user may also directly log in to the cloud service platform 11 (S31 b) or the network service server 122 (S31 c). If the user directly logs in to the cloud service platform 11, the user can then normally access the network service provided by the cloud service platform 11. Next, the data synchronization module 123 synchronizes the service data of the network service server 122 to the updated service data of the cloud service platform 11 (S35). If the user directly logs in to the network service server 122, the user then normally accesses the network service provided by the network service server 122 (S37). Next, the data synchronization module 123 synchronizes the service data of the cloud service platform 11 to the updated service data of the network service server 122 (S38).

From the above description, when the login module 122 is abnormal, the system framework of the present embodiment allows the user to log in to the cloud service platform 11 or the network service server 122 of the agent system 12 by himself/herself to access the network service needed. Therefore, the network service providing system of the present embodiment may avoid the problem that a single failure of point would cause the user unable to access the network service.

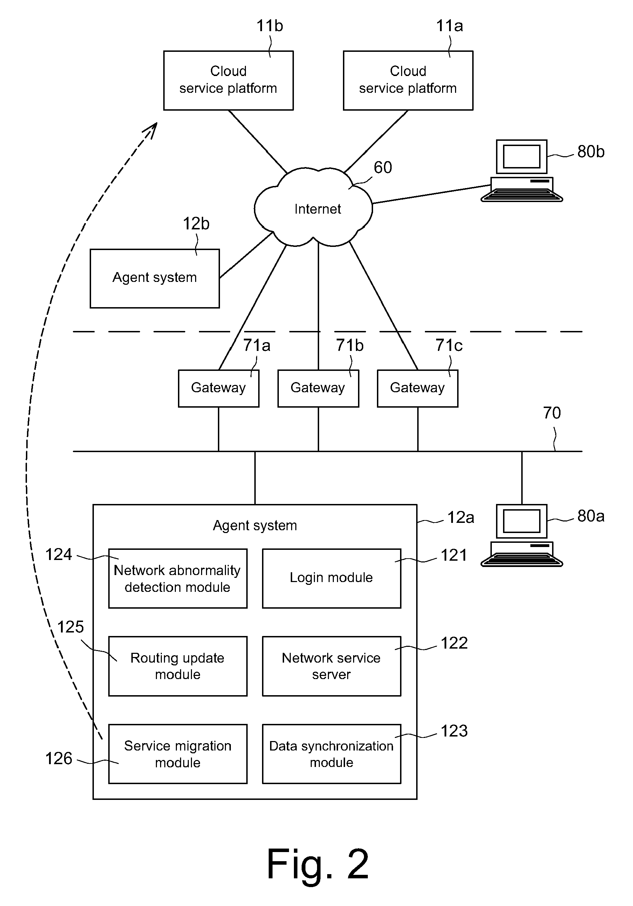

Referring to Fig. 2, the network 70 may connect with the Internet 60 through one of the many gateways 71 a, 71 b, 71 c. Therefore, the network abnormality detection module 124 may detect the connection qualities of the gateways 71 a, 71 b, 71 c between the network 70 and the Internet 60 to the cloud service platform 11 a so that the login module 121 can decide which of the gateways would be used to establish a connection with the cloud service platform 11 a. Normally speaking, the login module 121 directs the user device 80a to use the gateway with the better connection quality to establish a connection with the cloud service platform 11 a.

According to an embodiment, the agent system 12a includes a routing update module 125. Depending on the outcome of the connection qualities of the detected plurality of gateways 71 a, 71 b, 71 c by the network abnormality detection module 124, the routing update module 125 may select the gateway 71 a, 71 b or 71 c with the better connection quality as the default gateway, and update a routing table, so that network devices in the network 70 may connect to the Internet through the gateway with the better connection quality.

According to an embodiment, the network service providing system further includes another agent system 12b connected with the Internet 60. The framework of the agent system 12b can be similar to the agent system 12 or the agent system 12a, and the description thereof is omitted here to avoid redundancy. The login module of the agent system 12b may direct the user device to establish a connection with the cloud service platform 11 a or the network service server in the agent system 12b. The data synchronization module of the agent system 12b may synchronize between the service data stored in the network service server 122 of the agent system 12a and the network service server of the agent system 12b. As illustrated in Fig. 2, the user device 80a in the network 70 can access the agent system 12b through the Internet 60. Alternatively, by applying adequate technology such as virtual private network (VPN) the agent system 12a and the agent system 12b may also be grouped into one internal network. According to an embodiment, when the user device in the same network segment as the agent system 12b cannot directly access the cloud service platform 11 a, such as when the network is blocked, the blocked user device may access the network service provided by the agent system 12b or the agent system 12a to thereby maintain the availability and usability of the network service for the blocked user device.

According to an embodiment, the agent system 12a includes a service migration module 126. The service migration module 126 can convert the service data stored in the network service server to be in accordance with the application program interface (API) or the supported data format or protocol of another cloud service platform 11 b, and synchronize the data in the cloud service platform 11 b to the converted data. According to the framework illustrated in Fig. 2, the network service providing system in the present embodiment can easily migrate from the cloud service platform 11 a to the cloud service platform 11 b, and the network would not be interrupted during the migration process, so the user can normally access the network service supplied by the network service server 122. Preferably, the service migration module 126 migrates the data required for system operation initially upon the network service providing system of the present embodiment is being constructed, the setting information data such as account information, folder names, user permissions and so on.

For example, suppose an enterprise has already used the service provided by the cloud service platform 11 a first. When the agent system 12a of the present embodiment is introduced, the service migration module 126 would migrate the information stored in the cloud service platform 11 a required for system operation to the agent system 12a, and then synchronize the service data required by the network service in the agent system 12a. By the same token, when migrating the network service to the cloud service platform 11 b, the service migration module 126 would migrate the information stored in the agent system 12a required for system operation to the cloud service platform 11 b, and then synchronize the required service data.

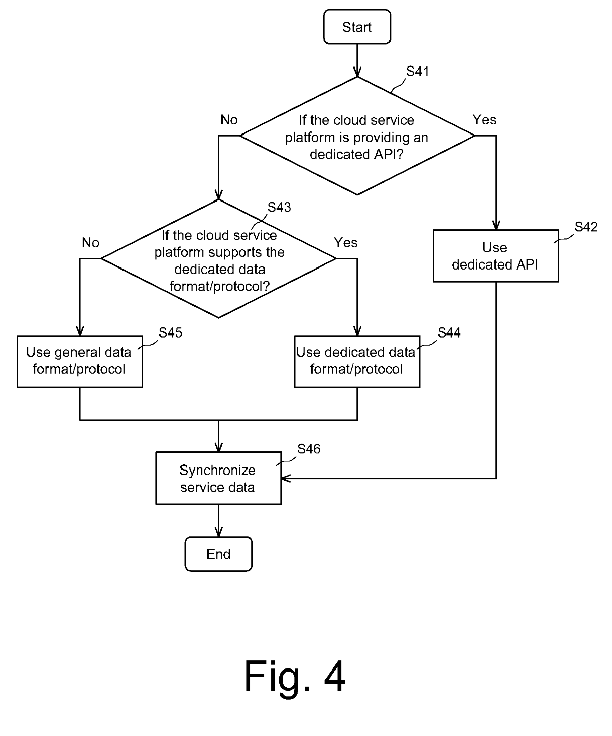

Referring to Fig. 4, there is illustrated the steps for synchronizing or migrating of the data synchronization module 123. First, the data synchronization module 123 determines if the cloud service platform 11 is providing a dedicated API (S41). If so, the data synchronization module 123 uses the dedicated API provided by the cloud service platform 11 (S42) to synchronize between the service data stored in the cloud service platform 11 and the network service server 122 (S46). If not, the data synchronization module 123 determines again if the cloud service platform 11 supports the dedicated data format or protocol (S43). If so, the data synchronization module 123 uses the data format or protocol supported by the cloud service platform 11 (S44) to synchronize between the service data stored in the cloud service platform 11 and the network service server 122. If not, the data synchronization module 123 uses a general data format or protocol (S45) to synchronize between the service data stored in the cloud service platform 11 and the network service server 122 (S46).

For instance, the cloud service provided by Google is based on https protocol combined with the Atom publishing protocol (AtomPub/APP) for adding new and modifying network resources. According to an embodiment, Internet message access protocol (IMAP) can be used in general for synchronization operations of emails.

In conclusion, the network service providing system with high reliability of the present invention provides a system using the login module of the agent system that directs the user to establish a connection with the cloud service platform or the network service server of the agent system based on the connection quality of the network or the network location of the user device. The user may also log in to the cloud service platform or the network service server in the agent system on his or her own to access the corresponding network service. Therefore, the network service providing system of the present invention may avoid the single failure of point problem thereby having a better reliability. Preferably, the network service providing system of the present invention may also allow the administrator to more easily migrate the network service provided by an enterprise to another heterogeneous cloud service platform without interruption to the access of the network service by the user during the migration process.

While the invention is susceptible to various modifications and alternative forms, a specific example thereof has been shown in the drawings and is herein described in detail. It should be understood, however, that the invention is not to be limited to the particular form disclosed, but to the contrary, the invention is to cover all modifications, equivalents, and alternatives falling within the spirit and scope of the appended claims.

## Claims

1. A network service providing system with high reliability, wherein the improvement comprises:
a cloud service platform (11), a first node in an Internet (60), for providing a network service to be accessed by a user device (80a, 80b); and
a first agent system (12), a first node in a first network (70), wherein the first network (70) is linked with the Internet (60), and the first agent system (12) comprises:
a first network service server (122) for providing the network service to be accessed by the user device (80a, 80b);
a first login module (121) receiving an identification information inputted from the user device (80a, 80b) and directing the user device (80a, 80b) to establish a connection with the cloud service platform (11) or the first network service server (122); and
a first data synchronization module (123) for synchronizing a stored service data of the cloud service platform (11) and the first network service server (122).

2. The network service providing system with high reliability according to claim 1, wherein the improvement further comprises:
a second agent system (12b), a node in a second network, wherein the second network is linked to the Internet (60), and the second agent system (12b) comprises:
a second network service server (122 of 12b) for providing the network service to be accessed by the user device (80a, 80b);
a second login module (121 of 12b) receiving the inputted identification information from the user device (80a, 80b) and directing the user device (80a, 80b) to establish a connection with the cloud service platform (11 a) or the second network service server (122 of 12b); and
a second data synchronization module (123 of 12b) for synchronizing the service data of the first network service server (122 of 12a) and the second network service server (122 of 12b).

3. The network service providing system with high reliability according to claim 2, wherein the user device of the second network is not able to access the cloud service platform (11 a).

4. The network service providing system with high reliability according to claim 1, wherein the first agent system (12) is provided by an Internet service provider (ISP).

5. The network service providing system with high reliability according to claim 1, wherein the first data synchronization module (123) uses an application program interface (API) provided by the cloud service platform (11) or a data format or protocol supported by the cloud service platform (11) to synchronize the service data.

6. The network service providing system with high reliability according to claim 1, wherein the user device (80a, 80b) is a second node in the Internet (60) or the first network (70), and based on the network location of the user device (80a, 80b), the first login module (121) directs the user device (80a, 80b) to establish a connection with the cloud service platform (11) or the first network service server (122).

7. The network service providing system with high reliability according to claim 1, wherein the first agent system (12) further comprises a network abnormality detection module (124) for detecting a connection quality of the cloud service platform (11) and the first network service server (122), and based on the connection quality, the first login module (121) directs the user device (80a, 80b) to establish a connection with the cloud service platform (11) or the first network service server (122) with the better connection quality.

8. The network service providing system with high reliability according to claim 7, wherein the network abnormality detection module (124) further detects connection qualities of a plurality of gateways (71 a, 71 b, 71 c) between the first network (70) and the Internet (60) to the cloud service platform (11 a), and directs the user device (80a, 80b) to establish a connection with the cloud service platform (11 a) through the gateway with the better connection quality.

9. The network service providing system with high reliability according to claim 8, wherein the first agent system (12a) further comprises a routing update module (125) that selects based on the connection qualities of the plurality of gateways (71 a, 71 b, 71 c) to the cloud service platform (11 a) the gateway of the better connection quality as a default gateway, and updates a routing table.

10. The network service providing system with high reliability according to claim 1, wherein the first agent system (12a) further comprises a service migration module (126) which converts the service data of the first network service server (122) according to the API provided by another cloud service platform (11 b) or the data format or protocol supported by the other cloud service platform (11 b), and synchronizes the service data in the other cloud service platform (11b).

11. The network service providing system with high reliability according to claim 1, wherein the network service comprises email service, web service, file management service, calendar, address book, user authentication or the combination thereof.
